# EUROPÄISCHE PATENTSCHRIFT

(11) **EP 2 544 327 B1**
(45) Veröffentlichungstag und Bekanntmachung des Hinweises auf die Patenterteilung: **27.02.2019**
(21) Anmeldenummer: 11173322.6
(22) Anmeldetag: 08.07.2011
(51) Int. Cl.: H02M 7/483, H02J 3/28, H02J 3/32, H02J 3/18

(54) **ENERGIESPEICHERANORDNUNG UND WECHSELLASTVERBRAUCHER**
ENERGY STORAGE ASSEMBLY AND FLUCTUATING LOAD
DISPOSITIF D'ACCUMULATION D'ÉNERGIE ET UNE CHARGE FLUCTUANTE

(43) Veröffentlichungstag der Anmeldung: 09.01.2013
(73) Patentinhaber: Siemens Aktiengesellschaft, 80333 München (DE)
(72) Erfinder: Eckert, Peter, 91058 Erlangen (DE); Hoffmann, Reinhard, 91054 Erlangen (DE); Hörger, Wolfgang, 91353 Hausen (DE); Rechenberg, Karsten, 91077 Dormitz (DE)

(56) Entgegenhaltungen:
- WO-A1-2010/102667
- CN-A- 101 710 704
- QIAN C ET AL: "A CASCADED CONVERTER-BASED STATCOM WITH ENERGY STORAGE", 2002 IEEE POWER ENGINEERING SOCIETY. WINTER MEETING. CONFERENCE PROCEEDINGS. NEW YORK, NY , JAN. 27 - 31, 2002; [IEEE POWER ENGINEERING SOCIETY], NEW YORK, NY : IEEE, US, 27. Januar 2002 (2002-01-27), Seiten 544-549, XP001099584, DOI: 10.1109/PESW.2002.985062 ISBN: 978-0-7803-7322-8
- CHONG HAN ET AL: "Design of an Ultra-Capacitor Energy Storage System (UESS) for Power Quality Improvement of Electric Arc Furnaces", INDUSTRY APPLICATIONS SOCIETY ANNUAL MEETING, 2008. IAS '08. IEEE, IEEE, PISCATAWAY, NJ, USA, 5. Oktober 2008 (2008-10-05), Seiten 1-6, XP031354060, ISBN: 978-1-4244-2278-4

## Beschreibung

Die Erfindung betrifft eine Energiespeicheranordnung für eine mit einem Energieversorgungsnetz Leistung austauschende elektrische Last und einen Wechsellastverbraucher als derartige elektrische Last.

Eine an einem Energieversorgungsnetz angeschlossene beziehungsweise von diesem gespeiste elektrische Last ist zum Beispiel eine an einem Mittelspannungsnetz angeschlossene Industrieanlage. Bestimmte Industrieanlagen, wie zum Beispiel Stahlwerke, Walzstraßen oder Schmelzen, insbesondere deren Elektro-, z.B. Lichtbogenöfen, weisen einen hohen elektrischen Leistungs- bzw. Energiebedarf auf, welcher vom Energieversorgungsnetz zu decken ist. Für solche Industrieanlagen werden heute zunehmend statische Umrichter (VSC, voltage source converter) mit direktem Anschluss an das Energieversorgungsnetz, z.B. ein Mittel- oder Hochspannungsnetz eingesetzt. Der Umrichter wird hierbei sowohl zur Last als auch zum Energieversorgungsnetz parallel geschaltet. Bestimmte Verbraucher in derartigen Anlagen, z.B. Lichtbogenöfen oder Walzstraßen, werden auch Wechsellastverbraucher genannt.

Beispielsweise beim Betrieb eines Lichtbogenofens existieren Zeitintervalle, in denen die benötigte elektrische Augenblicksleistung in sehr kurzen Zeitintervallen, nämlich im Bereich von Millisekunden, extrem schwankt (sogenannter Flicker). Außerdem ergibt sich über längere Zeitspannen von zum Beispiel ca. 30-60 Minuten - nämlich einer Prozessdauer eines Lichtbogenofens zur Stahlschmelze - ein Verlauf, in dem der aufzunehmende Leistungsmittelwert der Last etwa vorhersehbar ist und nur vergleichsweise langsam, nämlich im Minutenbereich, schwankt. Dieser oftmals stark schwankende Leistungsbedarf der Lasten belastet die Energieversorgungsnetze im hohen Maße und führt zu hohen Kosten bei den Energieversorgungsunternehmen, die wiederum auf den Betreiber der Last zurückfallen. Die Abnahme von regenerativer elektrischer Energie aus dem Energieversorgungsnetz ist wegen der hohen Leistungsspitzen nicht effektiv möglich.

Ein anderes Problem ergibt sich bei elektrischen Lasten, welche sensibel auf Spannungsschwankungen im Energieversorgungsnetz reagieren, zum Beispiel Werke zur Halbleiterherstellung. Hier muss die Versorgungsspannung des Energieversorgungsnetzes lastseitig stabilisiert werden. Gleiches gilt für die Stabilisierung von stromerzeugenden Synchronmaschinen als Last (Energiequelle, negative Last), vor allem in einem Fehlerfall der Maschine, zum Beispiel bei einem Lastabwurf. Auch hier muss bei einem Fall der Verbindung der Maschine zum Versorgungsnetz die bis zur Leistungsfreischaltung der Maschine noch in dieser erzeugte Energie abgeführt werden. Heute wird eine derartige Energie an Shunt-Widerständen in Wärme umgesetzt.

Die Leistungsschwankungen in derartigen Industrieanlagen, wie zum Beispiel Stahlwerken werden derzeit üblicherweise an das Energieversorgungsnetz weitergegeben.

Für Blindleistungsschwankungen von Industrieanlagen gibt es seit langem Blindleistungskompensationsanlagen. Moderne, beispielsweise auf IGBT-Technik basierende Umrichter (VSC) können bereits eine Kompensation von Blindleistung realisieren. Eine Kompensation der Wirkleistungsschwankungen wird allerdings nur in sehr geringem Maß realisiert.

Batteriespeichersysteme sind prinzipiell auch für hohe Energiemengen bekannt, können aber nicht für die vorgegebenen bzw. z.B. von einem Lichtbogenofen benötigten hohen Leistungen bzw. -spitzen bei gleichzeitig hohem Energiespeichervermögen eingesetzt werden.

Aus der WO 2009/121656 A2 ist es bekannt, Doppelschichtkondensatoren (DLC, double layer capacitor, auch "Ultracaps" der Fa. EPCOS) als sogenannte Superkondensatoren im Straßenbahnbetrieb einzusetzen. Diese dienen dann als Energiespeicher für geringe Energiemengen.

Die Firma ABB bietet mit dem Produkt "DynaPeaQ ®" einen Energiespeicher auf der Basis von Li-Ion-Zellen in Verbindung mit einem Mittelspannungsumrichter an, der ein hohes Energiespeichervermögen aufweist. Die Leistungsveränderungen sind hierbei moderat und die zulässigen Lastzyklen begrenzt.

Zur Verbesserung der Spannungsqualität für sensible Verbraucher ist auch ein sogenanntes "dynamic voltage restorer (DVR)" Speichersystem bekannt, das über einen Transformator die in Batterien gespeicherte Energie dahingehend nutzt, dass anstehende Netzspannungsschwankungen durch eine additive Spannungskomponente zu einem Optimalwert hin ausgeglichen werden.

Prinzipiell sind damit Energiespeichersysteme bekannt. Die bekannten Systeme beziehen sich jedoch entweder auf eine hohe Leistungsspitze, wie zum Beispiel die oben genannten Doppelschichtkondensatoren mit geringer gespeicherter Energiemenge oder aber auf eine hohe Energiespeichermenge bei moderater Leistungsspitze und einer relativ geringen Lastzykluszahl.

Aus der CN 101 710 704 A ist eine Vorrichtung zur Einspeisung von Wirk- und Blindleistung bekannt. Die Vorrichtung weist dabei eine Vielzahl von modularen Stromrichtereinheiten auf, die Batterien mit einem Energieversorgungsnetz zum Energieaustausch, Blindleitungskompensation oder Phasenausgleich verbinden.

Aufgabe der vorliegenden Erfindung ist es, den Leistungsaustausch eines Energieversorgungsnetzes mit einer elektrischen Last zu verbessern, und einen verbesserten Lichtbogenofen anzugeben.

Die Aufgabe wird durch eine Energiespeicheranordnung gemäß Anspruch 1 gelöst. Vorteilhafte Ausführungsformen sind in den abhängigen Ansprüchen definiert.

Die Energiespeicheranordnung weist dabei zwei Anschlüsse auf, welche der Parallelschaltung zur Last und zum Energieversorgungsnetz dienen. Zwischen die beiden Anschlüsse ist ein spannungseingeprägter, einen Energiespeicher enthaltender Umrichter geschaltet. Die Topologie entspricht damit der herkömmlichen Anschaltung einer Last an ein Netz mit Hilfe eines VSC. Erfindungsgemäß ist jedoch der Energiespeicher im Umrichter zur Speicherung einer Energiemenge ausgebildet, die eine für den regulären Betrieb des Umrichters notwendige Energiemenge um ein vielfaches übersteigt.

Der reguläre, d.h. klassische, bisher bekannte Betrieb eines o.g. Umrichters zeichnet sich dadurch aus, dass der Energiespeicher so ausgelegt ist, dass er lediglich eine Energie zur Kommutierung der Ventile des Umrichters, d.h. zum Beispiel zum Betrieb der im Umrichter vorhandenen IGBTs (Insulated Gate Bipolar Transistor) aufnehmen kann. Der Energiespeicher ist dann ein herkömmlicher Zwischenkreiskondensator, welcher üblicherweise eine Kapazität im Millifarad-Bereich aufweist.

Der erfindungsgemäße Energiespeicher erreicht eine vielfach größere Speicherkapazität. Der erfindungsgemäße Energiespeicher in einem vergleichbaren Umrichter bewegt sich dann z.B. im Farad-Bereich, unterscheidet sich also vom herkömmlichen Energiespeicher um einen Faktor von einigen Zig oder Hundert bis zu einigen Tausend oder mehr. Der Energiespeicher dient damit zur Aufnahme von Wirk- und/oder Blindenergie beziehungsweise -leistung einer vielfach größeren Menge. Mit anderen Worten fasst der Energiespeicher eine Energiemenge, die wesentlich größer ist als diejenige, die in etwa für einen Schaltzyklus des Umrichters nötig wäre.

Ein bisheriger klassischer Umrichter mit klassischem Zwischenkreiskondensator ist daher lediglich in der Lage, etwa die in einer einzigen Netzperiode im Umrichter anfallende Leistung zu speichern. Für Wirkleistungszwischenspeicherung ist jedoch nur eine sehr geringe, d.h. im Anlagenbetrieb nicht spürbare Kapazität vorhanden. Durch den erfindungsgemäßen, wesentlich größeren Energiespeicher kann auch Leistung bzw. Energie dort gespeichert werden, die im Zusammenwirken von Netz und Last spürbar, d.h. relevant ist. Entsprechende Wirkleistung wird daher für wesentlich mehr als eine Netzperiode im Umrichter gespeichert. Netzperioden bewegen sich dabei etwa im Bereich von 20 Millisekunden. Die spürbare Speicherkapazität des erfindungsgemäßen Energiespeichers erstreckt sich dabei über Millisekunden, Sekunden oder auch Minuten. Erfindungsgemäß wird also dem Umrichter ein leistungsstarker Energiespeicher zugeordnet, beziehungsweise für diesen konfiguriert, der für die oben genannten Problemstellungen eingesetzt werden kann. Dieser Energiespeicher weist dann einerseits eine hohe Leistungsdynamik und andererseits eine hohe Speicherkapazität für eine hohe Anzahl von Lastzyklen auf.

Die Erfindung beruht auf der Erkenntnis, dass inzwischen Energiespeicher zur Verfügung stehen, die für eine spürbare Kompensation von insbesondere Wirkleistung verwendet werden können und die auch im nutzbaren Umfang beziehungsweise in nutzbarer Technologie zur Verfügung stehen.

Erfindungsgemäß wird also eine Energiespeicheranordnung vorgeschlagen, die zur Speicherung und Abgabe elektrischer Energie dient, die einerseits eine hohe Leistungsspitze zulässt und eine große Energie speichert. Energiespeichern, die in der Lage sind, kurzzeitig große Leistungen zu liefern und aufzunehmen, werden in den Umrichter (VSC) integriert. So wird eine Kompensation von Blind- und Wirkleistungsschwankungen im für die Last und das Netz relevanten Maß ermöglicht. Es erfolgt also eine direkte Integration des Energiespeichers, insbesondere auch eines Kurzzeitenergiespeichers in den Umrichter als dessen modulare und bedarfsangepasste Erweiterung. Damit ist auf einfache Weise eine signifikante Verbesserung der Netzanbindung der Last bzw. Anlagen bis hin zur Netzkompensation möglich.

Der erfinderische Schritt liegt in der Nutzung von Kapazitäten in der Größenordnung realer Energiespeicher, das heißt im hohen Farad-Bereich anstelle von reinen Zwischenkreiskapazitäten für die Kommutierung der IGBT im Millifarad-Bereich. Mit der direkt im Umrichter gespeicherten Energie kann auf einfache Weise ein Ausgleich von Wirkleistungsschwankungen realisiert werden. Dies kann zum einen zur signifikanten Reduzierung der Spitzenlastaufnahme von parallel zum Umrichter angeschlossenen Lasten, wie zum Beispiel Lichtbogenöfen, verwendet werden.

Neben der eigentlichen Umrichterfunktionalität kann so der Umrichter aufgrund des hohen Energiespeichervermögens auch die oben genannten Ausgleichsfunktionen für Wirk- und Blindleistungen übernehmen.

Ein weiterer Vorteil ergibt sich aus Sicht des Energieversorgungsnetzes: Der Umrichter kann bei Leerlauf der Lastseite auch zur Kompensation schneller Lastschwankungen im Versorgungsnetz genutzt werden. D.h. Wirkleistung kann aus dem Netz im Energiespeicher zwischengespeichert werden. Blindleistungskompensation des Netzes ist in relevantem Umfang möglich. So wird die Netzqualität verbessert, was einem Energieversorgungsunternehmen deutliche betriebliche Erleichterungen beziehungsweise Einsparungen bringen kann.

Mit der Möglichkeit, den Energiespeicher auch zur Netzstabilisierung eines Energieversorgungsunternehmens einzusetzen, erhält dieser eine zusätzliche Funktion: Er kann als Bereitschaftsspeicher bei Bedarf vom Energieversorger genutzt werden.

Im gleichen Maße ist für eine Last mit sensibler Spannungsversorgung eine temporäre Notstromversorgung über ein solches System möglich. Auch hier wieder eine zusätzliche Bereitschaftsfunktion zur Netzseite hin denkbar.

In einer bevorzugten Ausführungsform der Erfindung enthält der Energiespeicher verschiedene Teilspeicher, wobei die Teilspeicher voneinander unterschiedliche Ladegeschwindigkeiten und oder Speicherkapazitäten aufweisen. Energiespeicher sind derzeit entweder für eine hohe Leistungsabgabe bei geringem Speichervolumen oder aber für hohes Speichervolumen mit geringer oder mittlerer Leistungsabgabe konzipiert. Bei Batterien mit hoher Speicherdichte spielt auch die Anzahl der Ladezyklen eine Rolle, wobei bei nur geringer Entladung eine höhere Ladespielzahl möglich ist. Mit einem modularen Konzept von Teilspeichern, z.B. in einer kaskadierten Anordnung verschiedener Speichermodule wie Kondensator, Doppelschichtkondensatoren, Batterien (zum Beispiel in Li-Ionen-Technologie) werden die Vorteile jedes einzelnen Teilspeichers in einem einzigen Energiespeicher kombiniert. Von Bedeutung ist, dass über jeweilige, dem Teilspeicher zugeordnete Lade- beziehungsweise Entladegeräte das für das nachfolgende Speichermedium, also den Teilspeicher, optimale Belastungsprofil bereitgestellt wird.

Beispielsweise existieren zwei Teilspeicher, von welchen der eine vergleichsweise große Ladegeschwindigkeit und geringe Ladekapazität, der andere jedoch eine geringe Ladegeschwindigkeit und eine große Speicherkapazität aufweist. Beide Teilspeicher können so für bestimmte Teilaufgaben in der Energieversorgung oder im Energieausgleich bezüglich des Netzes oder der Last wirken.

In einer Variante dieser Ausführungsform enthält der Energiespeicher als ersten Teilspeicher einen herkömmlichen Speicherkondensator und als zweiten Teilspeicher einen Hintergrundspeicher. Der Speicherkondensator ist zur Speicherung einer Energiemenge ausgebildet, die im Bereich einer für den regulären Betrieb des Umrichters notwendigen Energiemenge liegt. Der Hintergrundspeicher ist derart ausgebildet, dass er zur Speicherung einer Energiemenge dient, die die Energiemenge im Speicherkondensator um ein Vielfaches übersteigt. Mit anderen Worten wird so gemäß der Erfindung ein herkömmlicher Speicherkondensator im Umrichter durch einen zusätzlichen Energiespeicher in Form des Hintergrundspeichers bezüglich seiner Speicherkapazität um ein Vielfaches ergänzt bzw. erhöht.

In einer weiteren Variante der oben genannten Ausführungsform ist einer der Teilspeicher direkt im Umrichter verschaltet. Zwischen diesem Teilspeicher und einem weiteren Teilspeicher ist dann eine Ladeschaltung geschaltet. Diese steuert einen Energiefluss zwischen den beiden Teilspeichern. Zum Beispiel ist der oben genannte Speicherkondensator als erster Teilspeicher direkt in den Umrichter integriert, das heißt wie üblich ohne Zwischenschaltung einer Ladeschaltung in diesen eingebaut. Der Hintergrundspeicher ist dann über eine Ladeschaltung am Speicherkondensator - z.B. in Parallelschaltung - angeschlossen. Mit anderen Worten liegt die Ladeschaltung zwischen dem Umrichter mit Speicherkondensator und dem Hintergrundspeicher. Der Zugriff des Umrichters auf die Energie im Hintergrundspeicher erfolgt dann immer bzw. lediglich über die Ladeschaltung. Diese steuert die Be- und Entladung des Hintergrundspeichers.

In einer Variante dieser Ausführungsform ist der Energiefluss automatisch derart geregelt, dass eine Spannung an einem der Teilspeicher in einem bestimmten Spannungsbereich gehalten wird. Z.B. wird die Spannung am Speicherkondensator durch einen Ladungsausgleich zwischen bzw. mit den anderen Teilspeichern in einem definierten Spannungsbereich gehalten. Eine Spannungsabsenkung am Speicherkondensator wird z.B. in dem Fall eintreten, wenn die Last Wirkleistung benötigt.

In einer Variante dieser Ausführungsform weist die Energiespeicheranordnung zusätzlich ein Steuergerät auf. Dieses steuert die Ladeschaltung hinsichtlich des Energieflusses zwischen den durch die Ladeschaltung getrennten Teilspeichern, wobei die Steuerung auf eine Anforderung der Last und oder des Versorgungsnetzes hin erfolgt. Anforderungen der Last können zum Beispiel zum Wirk- oder Blindlastausgleich hinsichtlich der Last erfolgen. So wird das Versorgungsnetz vor den Leistungsschwankungen der Last geschützt bzw. diese dem Netz gegenüber aufgefangen. Eine Anforderung des Versorgungsnetzes hingegen kann z.B. dazu dienen, kurzzeitige überflüssige Leistungsspitzen im Netz in der Energiespeicheranordnung zwischenzuspeichern und somit die Energiespeicheranordnung netzseitig durch ein Energieversorgungsunternehmen zu nutzen.

In einer weiteren Variante der oben genannten Ausführungsform ist ein Teilspeicher mit kleiner Ladegeschwindigkeit einem Teilspeicher mit größerer Ladegeschwindigkeit in Bezug auf den Umrichter in Reihenschaltung nachgeschaltet. Der dem Umrichter näherliegende Teilspeicher mit großer Ladegeschwindigkeit kann daher besonders schnell auf Anforderungen des Umrichters reagieren. So wird zum Beispiel ein im Umrichter zusätzlich direkt vorhandener herkömmlicher Speicherkondensator unterstützt. Der Teilspeicher mit kleinerer Ladegeschwindigkeit ist wiederum dem schnelleren Teilspeicher nachgeschaltet und unterstützt diesen wiederum hinsichtlich größerer Energiemengen mittel- oder langfristig. Die Energieübertragung zwischen Speicherkondensator und dem zweiten Teilspeicher erfolgt dann über den ersten Teilspeicher hinweg bzw. durch diesen hindurch. Die jeweiligen Teilspeicher können dabei jeweils eigene Ladeschaltungen aufweisen.

Eine alternative Ausführungsform zur eben beschriebenen ist eine solche, bei der zwei oder mehr Teilspeicher mit unterschiedlichen Ladegeschwindigkeiten jeweils für sich parallel zum Umrichter beziehungsweise zum Beispiel zu einem dem Umrichter zugeordneten herkömmlichen Speicherkondensator geschaltet sind. Beide Teilspeicher können dann direkt den herkömmlichen Speicherkondensator unterstützen.

In einer weiteren Ausführungsform umfasst der Energiespeicher einen Kondensatorspeicher mit einer Vielzahl von Superkondensatoren. In der Regel ist ein derartiger Kondensatorspeicher einer von mehreren Teilspeichern, die z.B. zusätzlich einen herkömmlichen, im Umrichter integrierten Speicherkondensator unterstützen. Der Kondensatorspeicher kann dabei dann als Hintergrundspeicher dienen. Ein Kondensatorspeicher kann jedoch auch anstelle eines herkömmlichen Speicherkondensators direkt, also ohne Zwischenschaltung einer Ladeschaltung mit dem Umrichter verbunden, beziehungsweise in diesen integriert sein. In der Regel ist der Kondensatorspeicher für eine schnelle Bereitstellung kleinerer Energien, hohe Leistungsspitzen und viele Lastzyklen zuständig beziehungsweise ausgelegt.

Mit der heute bekannten Kondensatortechnik, zum Beispiel auf Basis von Doppelschichtkondensatoren (DLC, auch Superkondensatoren genannt), ist eine derartige Leistungs- bzw. Energiekompensation durch einen Kondensatorspeicher realisierbar.

In einer weiteren Ausführungsform enthält der Energiespeicher einen Batteriespeicher mit mindestens einer Batterie. In der Regel ist auch der Batteriespeicher ein Teilspeicher unter mehreren, insbesondere als Hintergrundspeicher mit einer großen Gesamtkapazität und moderaten Leistungsspitzen sowie einer relativ geringen Lastzykluszahl. Ein entsprechender Batteriespeicher kann zum Beispiel einige 1000 Farad Speicherkapazität besitzen um zum Beispiel eine Leistung von zwei Megawatt für zehn Minuten bereitstellen zu können. Dies gilt z.B. für einen Batteriespeicher mit 600V Spannung. So kann die Last entweder alleine aus dem Teilspeicher oder auch zum Teil aus dem Netz mit Unterstützung aus dem Teilspeicher betrieben werden. Im letzteren Fall wird die Belastung des Spannungsversorgungsnetzes abgesenkt.

In einer weiteren Ausführungsform der Energiespeicheranordnung sind zwischen den Anschlüssen nicht nur ein einzelner sondern mehrere, einzeln ansteuerbare Umrichter zwischengeschaltet, in der Regel in Reihenschaltung. Mindestens einer der Umrichter ist im Sinne der vorliegenden Erfindung ausgeführt, das heißt mit jeweils einem erfindungsgemäßen Energiespeicher ausgerüstet. Eine solche Umrichtertopologie wird auch Multi-Level-Umrichter genannt, die Umrichter und ihre Ladeschaltungen sind dabei z.B. jeweils für sich einzeln ansteuerbar. Der Aufbau der jeweiligen erfindungsgemäßen Umrichter beziehungsweise Energiespeicher kann für mehrere Umrichter gleich aber auch unterschiedlich sein.

Ein weiterer erfinderischer Schritt besteht also in der Entkopplung der Funktion des Umrichters und der jeweiligen Speicherstufen, d.h. der Teilspeicher im Energiespeicher. Die Entkopplung erfolgt durch die individuelle Ansteuerung der den Teilspeichern zugeordneten Ladeschaltungen. Damit kann auch die o.g. Multi-Level-Topologie von Umrichtern genutzt werden, ohne die Umrichtersteuerung selbst, also z.B. hinsichtlich der Ansteuerung der Ventile in der H-Brücke, gravierend zu ändern.

Wesentliche Vorteile bestehen darin, dass mit der vorgeschlagenen Konfiguration eine Anwendung mit großer Leistung in Stahlwerken ermöglicht wird. Wird ein Standard-Multi-Level-Umrichter mit herkömmlichem Zwischenkreiskondensator erfindungsgemäß erweitert, kann die dynamische Wirklastschwankung eines Lichtbogenofens weitgehend ausgeglichen werden.

Hinsichtlich des Wechsellastverbrauchers wird die Aufgabe der Erfindung gelöst durch einen Wechsellastverbraucher, der als Last von einem Energieversorgungsnetz gespeist wird und dem eine erfindungsgemäße Energiespeicheranordnung im Sinne eines Wechsellastverbraucher-Systems zugeordnet ist. Insbesondere für Wechsellastverbraucher, z.B. Lichtbogenöfen oder Walzwerksantriebe, ist die genannte Energiespeicheranordnung besonders sinnvoll, um sowohl deren hochfrequente Leistungsspitzen - z.B. in einem Kondensatorspeicher - abzufangen und das Netz zu schützen als auch deren Dauerenergiebedarf während eines Prozesses (z.B. Schmelz-/Walzprozess) - z.B. aus einem Batteriespeicher - über den Umrichter zu unterstützen und somit weniger Energie aus dem Versorgungsnetz zu benötigen.

In einer bevorzugten Ausführungsform weist das Wechsellastverbraucher-System bzw. der Energiespeicher Wirk- und oder Blindleistungsschwankungen auf, welche in Bezug auf die übliche Prozessdauer im Wechsellastverbraucher hochfrequent sind. Dies ist zum Beispiel der oben angesprochene Flicker im Millisekundenbereich bei einem Lichtbogenofen. Der Energiespeicher ist dann derart ausgebildet, dass er zumindest einen relevanten Teil der hochfrequenten Wirk- oder Blindleistungsschwankungen zum Versorgungsnetz hin kompensiert. Ein relevanter Teil ist dabei z.B. im höheren einstelligen oder im zweistelligen Prozentbereich zu sehen. Sinnvoll ist es, die angesprochenen hochfrequenten Schwankungen nahezu vollständig auszuregeln, zum Beispiel zu mindestens 60% oder 80%, so dass nur noch ein geringer Anteil der Leistungsschwankungen das Versorgungsnetz überhaupt erreicht.

In einer weiteren Ausführungsform ist im Wechsellastverbraucher-System der Energiespeicher derart ausgebildet, dass er zumindest einen relevanten Teil der gesamten, vom Wechsellastverbraucher während einer Prozessdauer benötigten Wirk- oder Blindleistung zur Verfügung stellt. Mit anderen Worten erfolgt hier eine relevante Stützung der Dauerleistung gegenüber dem Netz. Die prozentualen Anteile sind bezüglich der Relevanz wie oben zu verstehen. Zum Beispiel wird mehr als 10% der für den Prozess im Lichtbogenofen benötigten Wirkleistung aus dem Energiespeicher bereitgestellt. Hier kann beispielsweise die Anschlussleistung des Wechsellastverbraucher-Systems zum Versorgungsnetz hin reduziert werden, obwohl der Wechsellastverbraucher selbst eine höhere Leistung aufweist, und die Differenzleistung aus dem Energiespeicher bereitgestellt wird.

Mit der erfindungsgemäßen Kombination verschiedener Speichertypen und dem gleichzeitig ausgeführten Lade- bzw. Entlademanagement wird z.B. folgendes Energiespeichersystem geschaffen, das optimal an Mittelspannung betrieben die oben geschilderten Anforderungen erfüllt: Die Anordnung umfasst eine Netzseite eines Zwischenkreisumrichters beliebiger Bauart, sowie eine nachgeschaltete Anordnung mit Doppelschichtkondensatoren und deren Lade-/Entladesystem. Wiederum nachgeschaltet ist den Doppelschichtkondensatoren eine Anordnung mit Speicherbatterien mit einem weiteren Lade-/Entladesystem.

Der im Zwischenkreisumrichter zusätzlich enthaltene herkömmliche Zwischenkreiskondensator in bekannter Technik stellt eine hohe Stromänderung zur Verfügung. Am Zwischenkreiskondensator ist das Doppelschichtkondensator-Ladesystem angeschlossen, das nachgeschaltete Doppelschichtkondensatoren auf eine Spannung auflädt, die nicht mit der Kondensatorspannung identisch sein muss. Die Lade-/Entladefunktion der Doppelschichtkondensatoren wird an ein Spannungsfenster des Zwischenkreiskondensators gekoppelt. Bei einer zu niedrigen Spannung des Zwischenkreiskondensators speisen die Doppelschichtkondensatoren den Zwischenkreiskondensator, um dessen Spannung anzuheben. Bei zu hoher Spannung des Zwischenkreiskondensators werden die Doppelschichtkondensatoren aus diesem geladen.

Zusätzlich ist eine Ladeanforderung für das nachgeschaltete Batteriesystem vorhanden. Bei Erreichen der jeweiligen Ladegrenze der Doppelschichtkondensatoren und der Batterien wird eine Überladung durch diese Ladeschaltungen verhindert.

An den Doppelschichtkondensatoren ist ein weiteres Batterieladegerät angeschlossen, das die nachgeschalteten Batterien lädt. Die Batteriespannung wird durch Reihenschaltung von Einzelzellen gewählt, auch sie muss nicht zwangsläufig mit der Spannung an den Doppelschichtkondensatoren übereinstimmen. Die Lade-/Entladefunktion der Batterie wird nur teilweise an ein Spannungsfenster der Doppelschichtkondensatoren-Spannung gekoppelt. Die Ladeanforderung für die Batterie kann nämlich auch direkt an das Doppelschichtkondensatoren-Ladegerät weitergeleitet werden, um den Ladevorgang der Batterien unter Ausnutzung der zwischengeschalteten Doppelschichtkondensatoren und des Batterieladegerätes zu optimieren. Die Ladecharakteristik der Batterien ist erheblich langsamer im Vergleich zur Ladung der Doppelschichtkondensatoren. Ladung und Entladung werden z.B. projektspezifisch, d.h. in Abhängigkeit der zu versorgenden Last und in Abhängigkeit der verwendeten Energiespeichertechnologien vorgenommen. Z.B. darf ein Lithium-Ionenspeicher nicht extrem entladen werden, wenn eine hohe Ladungszykluszahl erreicht werden soll.

Die Umrichtersteuerung kann außerdem eine externe Schnittstelle aufweisen. Diese erhält z.B. Informationen über die Wirk-/Blindleistungen eines stark schwankenden in der Last fließenden Stromes. Eine Wirkleistungsspitze wird dann z.B. durch Eingriff der Umrichtersteuerung in die Ladegeräte, d.h. durch die Speicherkapazität der Doppelschichtkondensatoren begrenzt; dies sind insbesondere schnelle Vorgänge.

Alternativ kann ein Wirkleistungsmittelwert für den Energieverbrauch der Last vorgegeben werden, so kann eine Smart-Grid-Funktion gegenüber dem Netz realisiert werden und der Energiebedarf aus dem Netz für ein Werk, welches die Last enthält, begrenzt werden.

Durch eine weitere Ansteuerung der Ladeschaltungen kann auch im Energieversorgungsnetz erzeugte überschüssige regenerative Energie in der Energiespeicheranordnung zwischengespeichert werden. Eine externe Schnittstelle der Umrichtersteuerung erhält auch z.B. Informationen vom Energieversorgungsunternehmen, um eine durch Laden des Energiespeichers realisierte Wirklast zur Stabilisierung des Netzes anzufordern bzw. zu erzeugen. Damit wird eine sogenannte Bereitschaftsfunktion der Energiespeicheranordnung implementiert.

Die externe Schnittstelle der Umrichtersteuerung kann außerdem Informationen von einem Werk erhalten, welches eine Energieerzeugende, "negative" Last enthält. Auch hier kann eine Wirklast zur Stabilisierung des Netzes angefordert werden, um eine von der Last erzeugte Energiemenge im Sinne einer Wirklast aufzufangen, wenn das Netz keine Wirkleistungsaufnahmekapazität hat oder die Verbindung dorthin unterbrochen ist (z.B. bei einem Lastabwurf). Auch hier handelt es sich um eine Bereitschaftsfunktion der Energiespeicheranordnung.

Für eine weitere Beschreibung der Erfindung wird auf die Ausführungsbeispiele der Zeichnungen verwiesen. Es zeigen, jeweils in einer schematischen Prinzipskizze:
- Fig.1: einen Lichtbogenofen mit Energiespeicher
- Fig.2: einen alternativen Energiespeicher mit parallel geschalteten Teilspeichern,
- Fig.3: einen Multi-Level-Umrichter mit Energiespeichern,
- Fig.4: einen alternativen Multi-Level-Umrichter,
- Fig.5: einen weiteren alternativen Multi-Level-Umrichter.

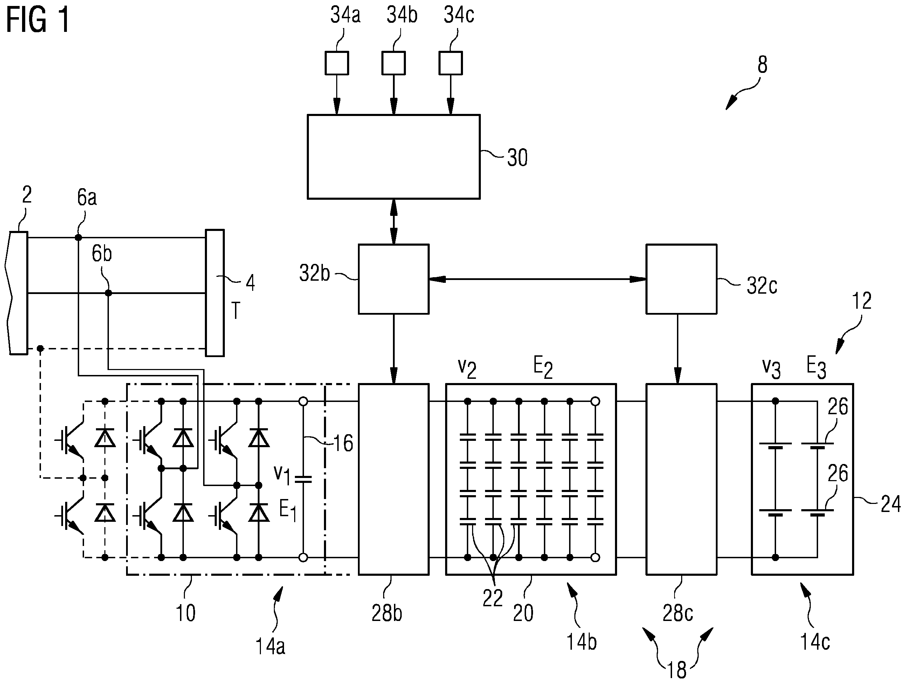

Fig. 1 zeigt eine von einem Energieversorgungsnetz 2 gespeiste Last 4, im Beispiel einen Lichtbogenofen. Über zwei Anschlüsse 6a,b ist dem Energieversorgungsnetz sowie der Last 4 eine Energiespeicheranordnung 8 parallel geschaltet.

Die Energiespeicheranordnung 8 weist einen zwischen die Anschlüsse 6a,b geschalteten spannungseingeprägten Umrichter 10 auf. Der Umrichter 10 enthält einen Energiespeicher 12. Der Energiespeicher 12 umfasst verschiedene Teilspeicher 14 a-c, welche in Summe zur Speicherung einer Energiemenge E1+E2+E3 ausgebildet sind, die eine für den regulären Betrieb des Umrichters 10 notwendige Energiemenge um ein vielfaches übersteigt.

Zur Vereinfachung ist in der Zeichnung nur eine zweiphasige Anordnung gezeigt. Die gesamte Anordnung kann jedoch auch drei oder mehr Phasen aufweisen, wie es in Fig.1 lediglich symbolisch für die Last 4, das Energieversorgungsnetz 2 und den Umrichter 10 gestrichelt angedeutet ist.

Der erste Teilspeicher 14a wird durch einen herkömmlichen Speicherkondensator 16 eines üblichen Umrichters gebildet. Der Speicherkondensator 16 kann lediglich eine erste Energiemenge E1 speichern, die etwa im Bereich einer für den regulären Betrieb des Umrichters 10 notwendigen Energiemenge liegt. Der Teilspeicher 14a ist hierbei direkt in den Umrichter 10 integriert, das heißt entsprechend einem herkömmlichen Speicherkondensator direkt und fest mit den dargestellten Schaltventilen des Umrichters 10 verbunden.

Die Teilspeicher 14b und 14c zusammen bilden einen Hintergrundspeicher 18. Der Teilspeicher 14b ist hierbei ein Kondensatorspeicher 20, der eine Mehrzahl von Superkondensatoren 22 enthält. Der Kondensatorspeicher 20 speichert eine Energiemenge E2, die bereits für sich die Energiemenge E1 um ein Vielfaches übertrifft.

Der Teilspeicher 14c ist ein Batteriespeicher 24, der eine Vielzahl von Batterien 26 enthält. Die im Batteriespeicher 24 speicherbare Energiemenge E3 übertrifft wiederum die Energiemenge E2 um ein Vielfaches.

Die Teilspeicher 14a-c weisen jeweils eine Ladegeschwindigkeit V₁₋₃ auf. Diese ist für den Teilspeicher 14a am größten, für den Teilspeicher 14b kleiner und für den Teilspeicher 14c nochmals kleiner. Der Teilspeicher 14c mit der geringsten Ladegeschwindigkeit V₃ ist also den Teilspeichern 14a und 14b mit den jeweils größeren Ladegeschwindigkeiten V1 und V2 in Bezug auf den Umrichter 10 gesehen, in Reihe nachgeschaltet. Dasselbe gilt zwischen den Teilspeichern 14a und 14b.

Dem Teilspeichern 14c ist eine Ladeschaltungen 28c zugeordnet, die dessen Be- und Entladung steuert. Auch dem Teilspeichern 14b ist eine Ladeschaltungen 28b zugeordnet, die sowohl dessen, als auch wegen der Kaskadierung die Be- und Entladung des Teilspeicher 14c mitsteuert. Die Ladeschaltungen 28b,c sind durch Ladegeräte realisiert. Die Ladeschaltung 28b regelt also den Energiefluss zwischen den Teilspeichern 14a und 14b bzw. 14c, die Ladeschaltung 28c den Energiefluss zwischen den Teilspeichern 14b und 14c. In den jeweiligen Ladeschaltungen 28b,c erfolgt eine Stromkontrolle der zwischen Teilspeichern 14a-c fließenden elektrischen Ströme.

Die Energiespeicheranordnung 8 umfasst außerdem ein Steuergerät 30 in Form eines Umrichtersteuergeräts, welches die Ladecharakteristiken 32b,c der jeweiligen Teilspeicher 14b und 14c kennt und die jeweiligen Ladeschaltungen 28b und 28c dementsprechend ansteuert. Die Ladecharakteristik 32b enthält dabei sowohl diejenige für den Kondensatorspeicher 20 als auch den Batteriespeicher 24. Die Ladecharakteristik 32c ist alleine die des Batteriespeichers 24.

Die Ansteuerung der Ladeschaltungen 28b,c erfolgt automatisch. Hierzu wird die Spannung am Speicherkondensator 16 durch Ladungsausgleich zwischen den Teilspeichern 14a,b,c in einem definierten Bereich gehalten. Eine Spannungsabsenkung wird in dem Fall eintreten, wenn die Last 4 Wirkleistung benötigt. Alternative Kriterien sind auch vorstellbar.

Eine alternative bzw. zusätzliche Ansteuerung erfolgt auf verschiedene Anforderungen 34a-c hin. Die Anforderung 34a stammt im Beispiel bzw. ist verursacht vom Energieversorgungsnetz 2 und bedeutet die Anforderung, zumindest einen Teil der Energiemenge E2,3 in das Energieversorgungsnetz 2 zu transportieren, um über die entsprechend übertragene Wirkleistung eine Netzstütze auszuführen.

Die Anforderung 34b stammt ebenfalls vom Energieversorgungsnetz 2 und dient zum Austausch der Energien E1, E2 und E3 mit der Last 4 oder einer beliebigen anderen Last in einem Werksnetz, z.B. einem Walzantrieb. So wird gegenüber dem Energieversorgungsnetz 2 eine Werksnetzstabilisierung durchgeführt.

Die Anforderung 34c stammt dagegen von der Last 4 und soll durch einen schnellen Austausch von Energie E2 mit der Last 4 einen Leistungsausgleich für schnelle dynamische Lastschwankungen, z.B. einen im Lichtbogenofen auftretenden Flicker, bewirken, damit die Lastschwankungen nicht auf das Energieversorgungsnetz 2 übertragen werden.

Im Lichtbogenofen 4 findet im Beispiel ein Schmelzprozess von Stahlschrott zu Stahl statt, der eine Prozessdauer T von etwa Zehn Minuten aufweist. Im Lichtbogenofen finden in Relation zu dieser Prozessdauer hochfrequente Wirk- und/oder Blindleistungsschwankungen im Millisekundenbereich statt. Der Teilspeicher 14b mit seiner Energiemenge E2 ist derart ausgelegt, dass er zumindest einen relevanten Teil dieser hochfrequenten Wirk- und/oder Blindleistungsschwankungen zum Energieversorgungsnetz 2 hin unterdrücken kann.

Der Teilspeicher 14c wiederum ist derart ausgelegt, dass dessen Energiemenge E3 ausreicht, für die gesamte Prozessdauer, d.h. etwa 10 Minuten einen relevanten Anteil der benötigten Wirk- und/oder Blindleistung für den Lichtbogenofen 4 bereitzustellen, so diese Energie nicht aus dem Energieversorgungsnetz 2 entnommen werden muss.

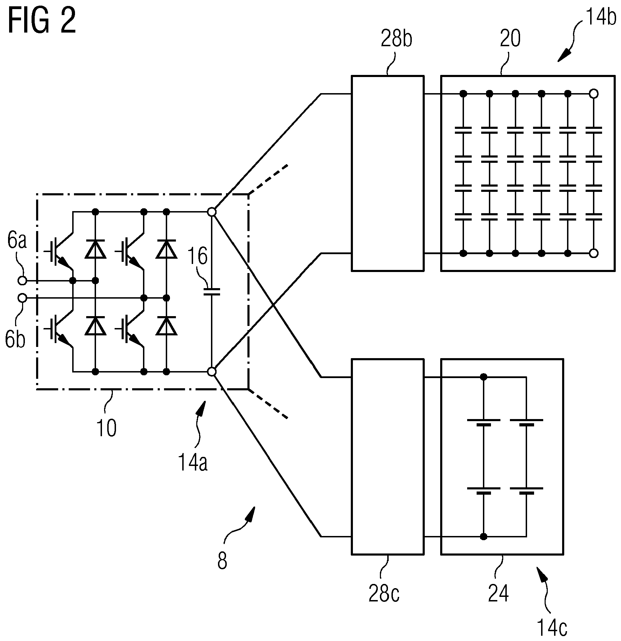

Fig. 2 zeigt eine alternative Ausführungsform einer Energiespeicheranordnung 8. Die Teilspeicher 14b und 14c in Form des Kondensatorspeichers 20 und des Batteriespeichers 24 sind zusammen mit den ihnen zugeordneten Ladeschaltungen 28b,c dem ersten Teilspeicher 14a in Form des Speicherkondensators 16 jeweils für sich parallel geschaltet. Dies steht im Gegensatz zu deren kaskadierter Reihenschaltung gemäß Fig. 1. In Fig. 2 sind daher die jeweils zwischen den Teilspeicher 14a und 14b bzw. zwischen den Teilspeichern 14a und 14c fließenden Ströme unabhängig voneinander. Diese bewirken daher eine Ladung oder Entladung der Teilspeicher 14b,c unabhängig voneinander. Mit anderen Worten fließt nicht, wie in Fig. 1, ein Ladestrom für den Teilspeicher 14c zwangsläufig auch durch den Teilspeicher 14b oder zumindest durch dessen Ladeschaltung 28b.

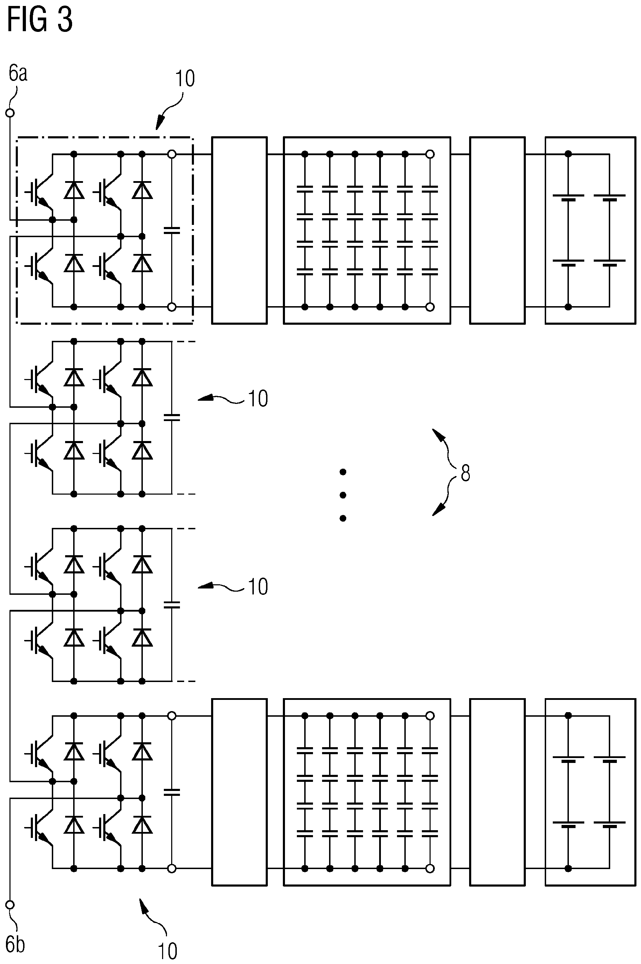

Fig. 3 zeigt einen sogenannten Multi-Level-Umrichter. Hier sind zwischen den Anschlüssen 6a,b mehrere Umrichter 10 in Reihe geschaltet. Jeder der Umrichter ist hier identisch zu Fig. 1 mit einer entsprechenden Energiespeicheranordnung 8 ausgerüstet. Denkbar sind jedoch auch unterschiedliche Ausgestaltungen der einzelnen Umrichter 10 bzw. deren Energiespeicheranordnungen 8. Die jeweiligen Umrichter 10 sind einzeln schaltbar.

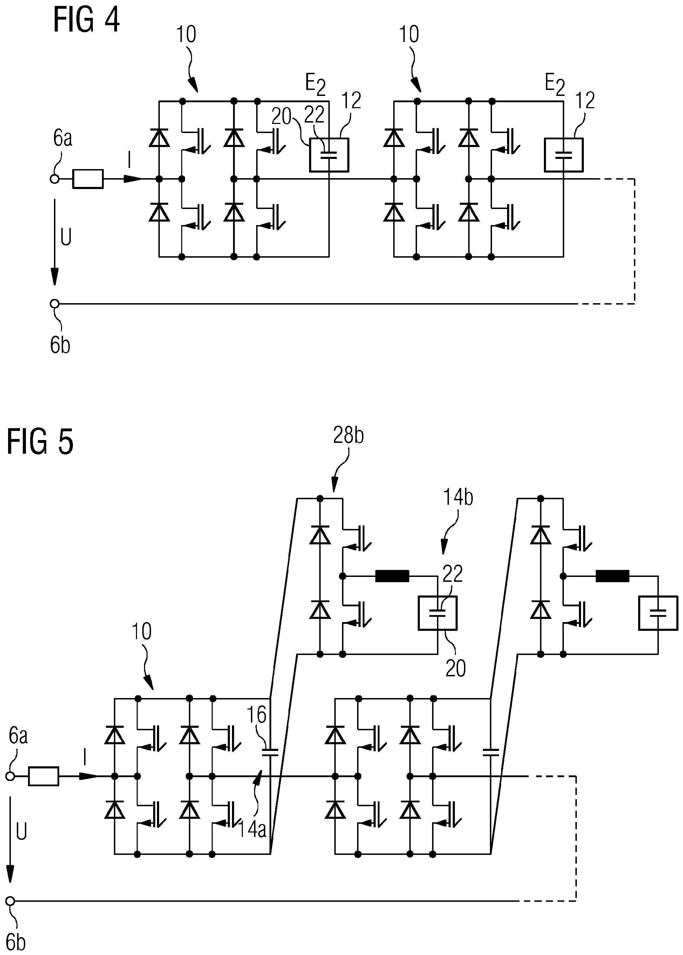

Fig. 4 zeigt einen alternativen Multi-Level-Umrichter mit mehreren einzelnen Umrichtern 10, welche wiederum zwischen den Anschlüssen 6a,b in Reihe geschaltet sind. Es sind nur zwei Umrichter gezeichnet, typischerweise sind hier bis zu 46 Umrichter 10 in Reihe geschaltet. Für einen kompletten Multi-Level-Umrichter mit drei Phasen, wobei Fig. 4 eine Anordnung für eine Phase zeigt, sind dann bis zu 138 Module mit Teilzwischenkreisspannungen bis 2000 V in Reihe geschaltet. Die Teilzwischenkreisspannung liegen an den jeweiligen Energiespeichern 12 an.

Fig. 4 zeigt außerdem als alternative Ausführung des Energiespeichers 12 einen solchen, der lediglich einen Kondensatorspeicher 20 aus Superkondensatoren 22 enthält, von denen in Fig. 4 lediglich einer symbolisch dargestellt ist. Der Energiespeicher 20 ist hier, vergleichbar dem Speicherkondensator 16 in den Figuren 1 - 3, direkt im Umrichter 10 verschaltet, d.h. ohne Zwischenschaltung einer entsprechenden Ladeschaltung. Mit anderen Worten werden in dieser Ausführungsform anstelle der üblichen Hochvolt-Zwischenkreiskondensatoren in der Größenordnung von Millifarad direkt Doppelschichtkondensatoren als Superkondensatoren 22 mit jeweils hoher Kapazität von 100 - 3000 Farad eingesetzt. Diesen kann jedoch alternativ auch noch ein herkömmlicher Zwischenkreiskondensator direkt parallel geschaltet sein.

Die so kurzfristig und schnell verfügbar gespeicherte Energie kann mit hoher Leistung bereitgestellt und zur Kompensation von Wirk- und Blindleistung verwendet werden.

Bei der direkten Anschaltung des Kondensatorspeichers 20 im Umrichter 10 ist die maximale Induktivität der Anschaltung, z.B. eine niederinduktive Verschienung, und die Kurzschlussleistung - hier sind Sicherungen einzuführen - zu beachten. Bei einer direkten Anschaltung zusätzlich zu den Zwischenkreiskondensatoren muss der Kondensatorspeicher 20 mit Induktivitäten und Sicherungen entkoppelt werden. Die nutzbare Energie E2 im Kondensatorspeicher 20 richtet sich hier gemäß E = 1/2 C(Umax² - Umin²) nach dem Spannungsbereich der Zwischenkreise und ist damit eingeschränkt.

Fig. 5 zeigt eine alternative Ausführungsform zu Fig. 4, bei welcher gemäß Fig. 1 im Umrichter 10 als Teilspeicher 14a ein Speicherkondensator 16 direkt verschaltet ist. Außerdem ist gemäß Fig. 1 dem Teilspeicher 14a über eine Ladeschaltung 28b, hier in Form eines Hoch- bzw. Tiefsetzstellers (DC/DC-Chopper) ein Teilspeicher 14b in Form eines Kondensatorspeichers 20 zugeordnet. Dies ermöglicht die Nutzung eines größeren Spannungsbereiches der Kondensatoren und damit nach der Gleichung E = 1/2 C(Umax² - Umin²) die Nutzung einer größeren Energie. Bei der Ausführungsform des Kondensatorspeichers 20 gemäß Fig. 5 können daher weniger Superkondensatoren 22 verwendet werden als in der Variante gemäß Fig.4. Es wird jedoch ein größerer Bauteileaufwand benötigt wegen der Ladeschaltung 28b: Hier ist z.B. ein Stromrichterzweig mit eigener Regelung und eine Chopperdrossel nötig. Der eigentliche Umrichter 10 bzw. dessen H-Brücke bleibt jedoch unverändert.

## Patentansprüche

1. Energiespeicheranordnung (8) für eine, eine elektrische Leistung mit einem Energieversorgungsnetz (2) austauschende elektrische Last (4),
- mit mindestens zwei, der Parallelschaltung zur Last (4) und dem Energieversorgungsnetz (2) dienenden Anschlüssen (6a,b),
- mit einem zwischen die Anschlüsse (6a,b) geschalteten, spannungseingeprägten, einen Energiespeicher (12) enthaltenden Umrichter (10),
- wobei der Energiespeicher (12) zur Speicherung einer Energiemenge (E₁+E₂+E₃) ausgebildet ist, die eine für den regulären Betrieb des Umrichters (10) notwendige Energiemenge um ein Vielfaches übersteigt,
- wobei der Energiespeicher (12) verschiedene Teilspeicher (14a-c) mit voneinander unterschiedlichen Ladegeschwindigkeiten (v₁₋₃) und Speicherkapazitäten für unterschiedliche Energiemengen (E₁₋₃) enthält,
- wobei ein Teilspeicher (14a-c) mit kleinerer Ladegeschwindigkeit (v₁₋₃) einem Teilspeicher (14a-c) mit größerer Ladegeschwindigkeit (v₁₋₃) in Bezug auf den Umrichter (10) in Reihe nachgeschaltet ist,
**dadurch gekennzeichnet, dass**
- der Energiespeicher (12) als ersten Teilspeicher (14a) einen herkömmlichen Speicherkondensator (16), als zweiten Teilspeicher (14b) einen Kondensatorspeicher (20) mit einer Mehrzahl von Superkondensatoren und als dritten Teilspeicher (14c) einen Batteriespeicher (24) mit einer Vielzahl von Batterien (26) aufweist,
- der Speicherkondensator (16) zur Speicherung einer Energiemenge (E₁) ausgebildet ist, die im Bereich einer für den regulären Betrieb des Umrichters notwendigen Energiemenge liegt, und ein aus dem zweiten und dritten Teilspeicher (14b,c) gebildeter Hintergrundspeicher (18) diese Energiemenge um ein Vielfaches übersteigt,
- die drei Teilspeicher (14a,14b,14c) in einer kaskadierten Reihenschaltung angeordnet sind,
- der Speicherkondensator (16) als erster Teilspeicher (14a) direkt im Umrichter (10) verschaltet ist, und
- zwischen dem ersten Teilspeicher (14a) und dem zweiten Teilspeicher (14b) sowie zwischen dem zweiten Teilspeicher (14b) und dem dritten Teilspeicher (14c) jeweils eine Ladeschaltung (28b,28c) angeordnet ist.

2. Energiespeicheranordnung (8) nach Anspruch 1, bei der der Energiefluss automatisch derart geregelt ist, dass eine Spannung an einem der Teilspeicher (14a-c) in einem bestimmten Spannungsbereich gehalten wird.

3. Energiespeicheranordnung (8) nach Anspruch 1 oder 2, mit einem die Ladeschaltungen (28b,c) hinsichtlich des Energieflusses auf eine Anforderung der Last (4) und/oder des Energieversorgungsnetzes (2) hin ansteuernden Steuergerät (30).

4. Energiespeicheranordnung (8) nach einem der vorhergehenden Ansprüche, mit mehreren, zwischen den Anschlüssen (6a,b) in Reihe geschalteten, jeweils einzeln ansteuerbaren Umrichtern (10) mit jeweiligen Energiespeichern (12).

5. Wechsellastverbraucher, der als Last (4) von einem Energieversorgungsnetz (2) gespeist ist, mit einer Energiespeicheranordnung (8) gemäß einem der Ansprüche 1 bis 4.

6. Wechsellastverbraucher nach Anspruch 5, der in Bezug auf eine Prozessdauer (T) des Wechsellastverbrauchers hochfrequente Wirk- und/oder Blindleistungssschwankungen aufweist, bei dem die Energiespeicheranordnung (8) derart ausgebildet ist, dass sie zumindest einen relevanten Teil der hochfrequenten Wirk- und/oder Blindleistungsschwankungen zum Energieversorgungsnetz (2) hin kompensiert.

7. Wechsellastverbraucher nach Anspruch 5 oder 6, bei dem die Energiespeicheranordnung (8) derart ausgebildet ist, dass sie zumindest einen relevanten Teil der gesamten, vom Wechsellastverbraucher während einer Prozessdauer (T) benötigten Wirk- und/oder Blindleistung zur Verfügung stellt.

## Claims

1. Energy storage arrangement (8) for an electric load (4) which exchanges electrical power (4) with an energy supply network (2),
- having at least two connections (6a,b) serving for the parallel connection to the load (4) and the energy supply network (2),
- and having a converter (10) which is connected between the connections (6a,b), is voltage-impressed and contains an energy store (12),
- wherein the energy store (12) is designed to store an energy amount (E₁+E₂+E₃) which exceeds that necessary for the regular operation of the converter (10) by a multiple,
- wherein the energy store (12) contains various partial stores (14a-c) with different charging speeds (V₁₋₃) from each other and storage capacities for different energy amounts (E₁₋₃),
- wherein a partial store (14a-c) with a lower charging speed (V₁₋₃) is connected in series downstream to a partial store (14a-c) with a higher charging speed (V₁₋₃) in relation to the converter (10),
**characterised in that**
- the energy store (12) has a conventional storage capacitor (16) as a first partial store (14a), a capacitor store (20) containing a plurality of supercapacitors as a second partial store (14b) and a battery store (24) containing a plurality of batteries (26) as a third partial store (14c),
- the storage capacitor (16) is designed to store an energy amount (E₁) which is in the range of that necessary for the regular operation of the converter, and a background store (18) formed from the second and third partial stores (14b,c) exceeds this energy amount by a multiple,
- the three partial stores (14a, 14b, 14c) are directly connected in a cascaded series connection,
- the storage capacitor (16) is directly connected in the converter (10) as a first partial store (14a), and
- a charging circuit (28b, 28c) is in each case arranged between the first partial store (14a) and the second partial store (14b) as well as between the second partial store (14b) and the third partial store (14c).

2. Energy storage arrangement (8) according to claim 1, wherein the energy flow is automatically regulated in such a way that a voltage is kept within a certain voltage range on one of the partial stores (14a-c).

3. Energy storage arrangement (8) according to claim 1 or 2, with a control device (30) controlling the charging circuits (28b,c) with regard to the energy flow at a request of the load (4) and/or the energy supply network (2).

4. Energy storage arrangement (8) according to one of the preceding claims, with a plurality of converters (10), each individually controllable and connected in series between the connections (6a,b), with respective energy stores (12).

5. Alternating load consumer, which is fed by an energy supply network (2) as a load (4), with an energy storage arrangement (8) according to one of the claims 1 to 4.

6. Alternating load consumer according to claim 5, which in relation to a process time (T) of the alternating load consumer has high-frequency active and/or reactive power fluctuations, wherein the energy storage arrangement (8) is designed in such a way that it compensates the energy supply network (2) for at least a relevant part of the high-frequency active and/or reactive power fluctuations.

7. Alternating load consumer according to claim 5 or 6, wherein the energy storage arrangement (8) is designed in such a way that it provides at least a relevant part of the total active and/or reactive power required by the alternating load consumer during a process time (T).

## Revendications

1. Système (8) d'accumulation d'énergie pour une charge (4) électrique échangeant de la puissance électrique avec un réseau (2) d'alimentation en énergie,
- comprenant deux bornes (6a, b) servant au montage en parallèle de la charge (4) et du réseau (2) d'alimentation en énergie,
- comprenant un convertisseur (10) monté entre les bornes (6a, b), auxquelles est appliquée une tension, et comportant un accumulateur (12) d'énergie,
- dans lequel l'accumulateur (12) d'énergie est constitué pour accumuler une quantité (E₁+E₂+E₃) d'énergie, qui dépasse d'un multiple la quantité d'énergie nécessaire au fonctionnement régulier de l'onduleur (10),
- dans lequel l'accumulateur (12) d'énergie comporte divers sous-accumulateurs (14a à c) ayant des vitesses (v₁ à ₃) de charge différentes les unes des autres et des capacités d'accumulation de quantité (E₁ à ₃) d'énergie différentes,
- dans lequel un sous-accumulateur (14a à c) ayant une vitesse (V₁ à ₃) de charge plus petite est monté par rapport au convertisseur (10) en série en aval d'un sous-accumulateur (14a à c) ayant une vitesse (V₁ à ₃) de charge plus grande,
**caractérisé en ce que**
- l'accumulateur (12) d'énergie a, comme premier sous-accumulateur (14a), un condensateur (16) d'accumulation habituel, comme deuxième sous-accumulateur (14b), un accumulateur (20) à condensateur ayant une pluralité de supercondensateurs et, comme troisième sous-accumulateur (14c), un accumulateur (24) à batterie ayant une pluralité de batteries (26),
- le condensateur (16) d'accumulateur est constitué pour l'accumulation d'une quantité (E₁) d'énergie, qui se trouve dans la plage d'une quantité d'énergie nécessaire au fonctionnement régulier de l'onduleur, et un accumulateur (18) d'arrière-plan formé du deuxième et du troisième sous-accumulateurs (14b, c) dépasse d'un multiple cette quantité d'énergie,
- dans lequel les trois sous-accumulateurs (14a, 14b, 14c) sont montés suivant un circuit série en cascade,
- le condensateur (16) d'accumulateur est connecté directement dans l'onduleur (10) et
- entre le premier sous-accumulateur (14a) et le deuxième sous-accumulateur (14b), ainsi qu'entre le deuxième sous-accumulateur (14b) et le troisième sous-accumulateur (14c), est monté respectivement un circuit (28b, 28c) de charge.

2. Système (8) d'accumulation d'énergie suivant la revendication 1, dans lequel le flux d'énergie est régulé automatiquement par le fait qu'une tension sur l'un des sous-accumulateurs (14a à c) est maintenue dans une plage de tension déterminée.

3. Système (8) d'accumulation d'énergie suivant la revendication 1 ou 2, comprenant un appareil (30) de commande commandant des circuits 28b, c) de charge, en ce qui concerne le flux d'énergie sur une demande de la charge (4) et/ou du réseau (2) d'alimentation en énergie.

4. Système (8) d'accumulation d'énergie suivant l'une des revendications précédentes, comprenant plusieurs onduleurs (10) montés en série entre les bornes (6a, b), pouvant être commandés individuellement et ayant leur propre accumulateur (12) d'énergie.

5. Consommateur de charge alternative, qui, en tant que charge (4), est alimenté par un réseau (2) d'alimentation en énergie, comprenant un système (8) d'accumulation d'énergie suivant l'une des revendications 1 à 4.

6. Consommateur de charge alternative suivant la revendication 5, qui, rapporté à une donnée (T) de processus du consommateur de charge alternative, a des fluctuations de haute fréquence de puissance active et/ou réactive, dans lequel le système (8) d'accumulation d'énergie est constitué de manière à compenser, au moins une partie pertinente, des fluctuations de haute fréquence de puissance active et/ou réactive allant au réseau (2) d'alimentation en énergie.

7. Consommateur de charge alternative suivant la revendication 5 ou 6, dans lequel le système (8) d'accumulation d'énergie est constitué de manière à mettre à disposition, au moins une partie pertinente, de toute la puissance active et/ou réactive nécessaire au consommateur de charge alternative pendant une durée (T) de processus.
